# EUROPEAN PATENT APPLICATION

(11) **EP 1 729 470 A2**
(43) Date of publication of application: **06.12.2006**
(21) Application number: 06008394.6
(22) Date of filing: 24.04.2006
(51) Int. Cl.: H04L 12/58

(54) **Method of displaying data in wireless terminal and wireless terminal adapted to display data**

(30) Priority: 28.04.2005 KR 20050035674
(71) Applicant: Samsung Electronics Co., Ltd., Suwon-si, Gyeonggi-Do (KR)
(72) Inventor: Chu, Se-Youp, Yeongtong-gu Suwon-si Gyeonggi-do (KR); Yoo, Wi-Hyun, Yeongtong-gu Suwon-si Gyeonggi-do (KR); Choi, Seung-Chul, Yeongtong-gu Suwon-si Gyeonggi-do (KR)
(74) Representative: Lang, Johannes

(57) **Abstract**

An apparatus and method for displaying data in a wireless terminal are disclosed. The display method includes the steps of attaching (205) image data selected in a message mode; displaying (206) the attached image data in a form of a thumbnail image; and transmitting (216) a message including the thumbnail image. Another method for displaying data in a wireless terminal is disclosed, which includes the steps of: attaching a file selected in an email mode; displaying the attached file in a form of a thumbnail image; and transmitting an email including the thumbnail image. Another method for displaying data in a wireless terminal is disclosed including the steps of displaying a thumbnail image attached to a message when the message is received and displaying original image data of a selected thumbnail image when a predetermined thumbnail image is selected from the displayed thumbnail image.

## Description

### BACKGROUND OF THE INVENTION

### Field of the Invention:

The present invention relates to an apparatus and method for displaying data in a wireless terminal. More particularly, the present invention relates to an apparatus and method for displaying data in a wireless terminal, which displays attached data in the form of a thumbnail image.

### Description of the Related Art:

Presently, the message service of wireless terminals is used more frequently than the general phone service.

The message service may be classified into a short message service (SMS) and a multimedia message service (MMS). Text input by a user is transmitted to a predetermined receiver in an SMS. Both text and an attached file are transmitted to a predetermined receiver in a multimedia message service. The multimedia message service represents a service in which music, photo, video files, and content created by a user may be transmitted to a predetermined receiver.

If the user of a wireless terminal attaches a file in a multimedia message mode, the display unit of the wireless terminal displays an icon reporting an attachment. Therefore, the user cannot view the attached file. In an email service of the wireless terminal, an attached file is displayed with a file title. Therefore, the user cannot view the attached file.

Accordingly, there is a need for an improved apparatus and method for allowing a user to view an attached file if the user of a wireless terminal attaches a file in a multimedia message or email mode.

### SUMMARY OF THE INVENTION

An aspect of exemplary embodiments of the present invention is to address at least the above problems and/or disadvantages and to provide at least the advantages described below. Accordingly, exemplary embodiments of the present invention have been made to solve the above-mentioned problems occurring in the prior art and an object of exemplary embodiments of the present invention is to provide an apparatus and method of displaying data in a wireless terminal, which displays attached data in the form of a thumbnail image.

In accordance with one aspect of exemplary embodiments of the present invention, a method to display data in a wireless terminal is provided. Image data selected in a message mode is attached, the attached image data is displayed in a form of a thumbnail image, and a message including the thumbnail image is transmitted.

In accordance with another aspect of exemplary embodiments of the present invention, a method to display data in a wireless terminal is provided. A file selected in an email mode is attached, the attached file is displayed in a form of a thumbnail image, and an email including the thumbnail image is transmitted.

In accordance with another aspect of an exemplary embodiment of the present invention, a method to display data in a wireless terminal is provided. A thumbnail image attached to a received message is displayed when the message is received and original image data of a selected thumbnail image is displayed when the predetermined thumbnail image is selected from the displayed thumbnail image, displaying original image data of the selected thumbnail image.

### BRIEF DESCRIPTION OF THE DRAWINGS

The above and other exemplary objects, features and advantages of certain exemplary embodiments of the present invention will be more apparent from the following detailed description taken in conjunction with the accompanying drawings, in which:
FIG. 1 is a block diagram illustrating a construction of a wireless terminal according to an exemplary embodiment of the present invention;
FIG. 2 is a flowchart illustrating a method of displaying an attached file in a message transmission mode of a wireless terminal according to an exemplary embodiment of the present invention;
FIG. 3 is a flowchart illustrating a method of displaying an attached file in an e-mail transmission mode of a wireless terminal according to an exemplary embodiment of the present invention; and
FIG. 4 is a flowchart illustrating a method of displaying an attached file in a message or email reception mode of a wireless terminal according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

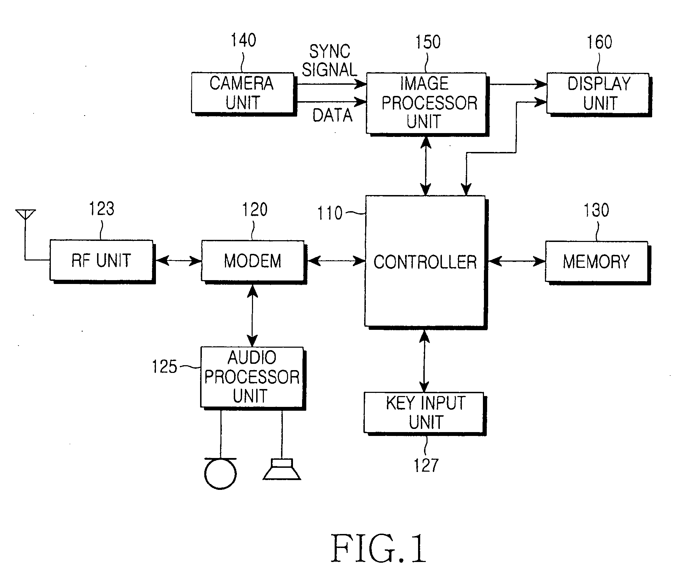

FIG. 1 is a block diagram illustrating a construction of a wireless terminal according to an exemplary embodiment of the present invention.

Referring to FIG. 1, a Radio Frequency (RF) unit 123 performs a wireless communication function of the wireless terminal. The RF unit 123 includes an RF transmitter (not shown) for up-converting and amplifying the frequency of transmitted signals and an RF receiver (not shown) for low-noise amplifying received signals and for down-converting the frequency of the received signals. A modem 120 includes a transmitter (not shown) for coding and modulating the transmitted signals and a receiver (not shown) for demodulating and decoding the received signals. An audio processor unit 125 may include a codec. The codec includes a data codec for processing packet data and an audio codec for processing audio signals such as voice signals. The audio processor unit 125 converts digital audio signals received from the modem 120 into analog signals through the audio codec for reproduction. Alternatively, the audio processor unit 125 converts analog audio signals generated from a microphone into digital audio signals through the audio codec and transmits the digital audio signals to the modem 120. The codec may be provided separately or included in a controller 110.

A memory 130 may include a program memory and a data memory. The program memory may store programs for controlling general operations of the wireless terminal, and programs for controlling attached data to be displayed in the form of a thumbnail image according to an exemplary embodiment of the present invention. The data memory temporarily stores data generated during the execution of the programs. Further, the memory 130 can store the thumbnail image of the attached image data according to an exemplary embodiment of the present invention.

The controller 110 performs a function of controlling the general operations of the wireless terminal. The controller 110 may also include the modem 120 and the codec. According to an exemplary embodiment of the present invention, the controller 110 controls the attached image data to be displayed in the form of a thumbnail image in a message transmission mode or a message reception mode. Further, the controller 110 controls the attached image data to be displayed in the form of a thumbnail image in an email transmission mode or an email reception mode.

A camera unit 140 includes a camera sensor and a signal processor. The camera sensor photographs image data and converts photographed optical signals into electric signals. The signal processor converts analog image signals photographed by the camera sensor into digital data. It is assumed that the camera sensor is a Charge-Coupled Device (CCD) sensor. The signal processor may be realized by a Digital Signal Processor (DSP). Further, the camera sensor may be integrated with the signal processor or the camera sensor may also be constructed separately from the signal processor.

An image processor unit 150 generates screen data for displaying image signals output from the camera unit 140. The image processor unit 150 processes the image signals, which are output from the camera unit 140, by the frame, and outputs the frame image data according to the characteristics and sizes of a display unit 160. The image processor unit 150 includes an image codec, compresses the frame image data, which is displayed on the display unit 160, by a predetermined scheme or restores the compressed frame image data into the original frame image data. The image codec may include a JPEG codec, an MPEG4 codec, and a wavelet codec among others. It is assumed that the image processor unit 150 has an On Screen Display (OSD) function, which may output on screen display data according to displayed screen sizes under the control of the controller 110.

The display unit 160 displays the image signals output from the image processor unit 150 on a screen, and displays user data output from the controller 110. The display unit 160 may be a Liquid Crystal Display (LCD). In this case, the display unit 160 may include an LCD controller, a memory capable of storing image data, an LCD device, etc. When the LCD has a touch screen function, the display unit 160 may also operate as an input unit. The display unit 160 displays the thumbnail image of the attached image data in the message transmission/reception mode according to an exemplary embodiment of the present invention. Further, the display unit 160 displays the thumbnail image of the attached image data in the email transmission or reception mode.

A key input unit 127 includes keys for inputting number and character information and function keys for setting various functions.

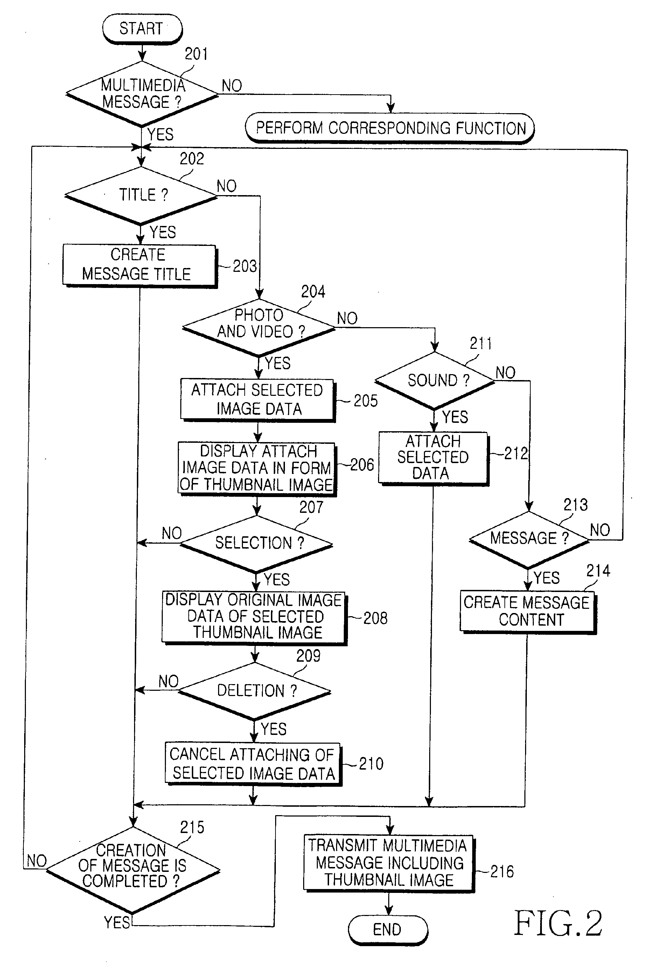

Hereinafter, an operation for displaying the attached data in the form of the thumbnail image in the wireless terminal as described above will be described in detail with reference to FIGs. 2 to 4.

FIG. 2 is a flowchart illustrating a method of displaying an attached file in the message transmission mode of the wireless terminal according to an exemplary embodiment of the present invention.

Referring to FIG. 2, if the user of the wireless terminal selects a multimedia message in the wireless terminal, the controller 110 detects the selection of the multimedia message and controls the wireless terminal to switch to a multimedia message creation mode in step 201.

If the user selects a title in the multimedia message creation mode, the controller 110 detects the selection of the title in step 202 and switches to a title input mode of the multimedia message in step 203. If the user inputs content corresponding to the title in the title input mode of the multimedia message of step 203 and selects a confirmation, the controller 110 detects the selection of the confirmation and stores the input content to create the title of the multimedia message in step 203.

Further, if the user selects photo and video in the multimedia message creation mode, the controller 110 detects the selection of the photo and video in step 204 and displays the type of photographed and stored image data in step 204. The image data represents still images and dynamic images. When the user selects an attachment for predetermined image data from the displayed image data, the controller 110 detects the selection of the attachment and attaches the selected image data as attached data of the multimedia message in step 205. The controller 110 generates a thumbnail image for the image data selected as the attached data and displays the attached image data in the form of the corresponding thumbnail image in step 206.

Steps 205 and 206 allow the user to attach the selected image data and easily check the attached image data through the thumbnail image.

When the selected image is displayed in the format of a thumbnail image is displayed and when the user selects a predetermined thumbnail image, the controller 110 detects the selection of the predetermined thumbnail image in step 207 and displays the original image data of the selected thumbnail image in step 208. If the user selects a deletion of a thumbnail image in steps 206 or 208, the controller 110 detects the selection of the deletion in step 209. Then the controller cancels the attaching of the selected image data and deletes the corresponding thumbnail image in step 210.

If the user selects sound in the multimedia message creation mode, the controller 110 detects the selection of the sound and displays the type of stored sound data in step 211. When the user selects predetermined sound data from the displayed sound data, the controller 110 detects the selection of the predetermined sound data and attaches the selected sound data as attached data of the multimedia message in step 212.

If the user selects a message in the multimedia message creation mode, the controller 110 detects the selection of the message in step 213 and switches the wireless terminal to a multimedia message input mode in step 214 to create the message content. Further, if the user inputs message content in the multimedia message input mode of step 214 and selects a confirmation, the controller 110 detects the selection of the confirmation and stores the input content as the content of the multimedia message.

If the creation of the multimedia message is completed through the above-described steps, the controller 110 detects the completion of the multimedia message in step 215 and transmits the created multimedia message to a predetermined reception number in step 216. The format of the multimedia message transmitted in step 216 stores the title, the message content, the sound data, the image data, and the thumbnail image data of the image data.

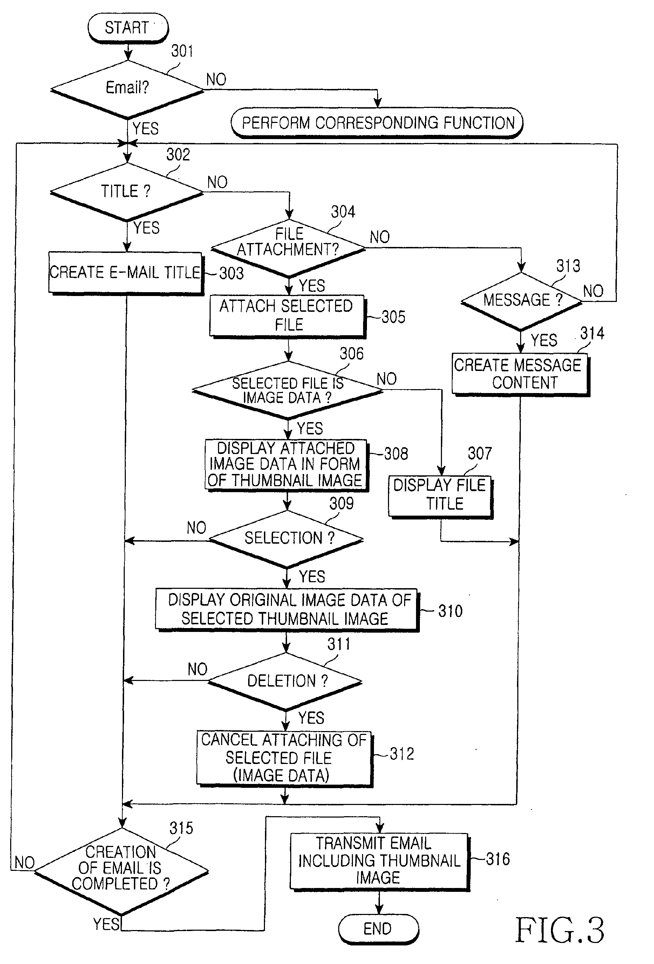

FIG. 3 is a flowchart illustrating a method of displaying an attached file in the email transmission mode of the wireless terminal according to an exemplary embodiment of the present invention.

Referring to FIG. 3, when the user of the wireless terminal selects an email in the wireless terminal, the controller 110 detects the selection of the email in step 301 and switches the wireless terminal to an email creation mode.

If the user selects a title in the email creation mode, the controller 110 detects the selection of the title in step 302 and switches the wireless terminal to an email title input mode so that the email title is created in step 303. Further, if the user inputs content corresponding to the title in the email title input mode of step 303 and selects a confirmation, the controller 110 detects the selection of the confirmation and stores the input content as the title of the email.

When the user selects a file attachment in the email creation mode, the controller 110 detects the selection of the file attachment and displays the type of files stored in the wireless terminal in step 304. If the user selects an attachment for a predetermined file from the displayed files, the controller 110 attaches the selected file as attached data of the email in step 305. While attaching the selected file, the controller 110 determines whether the selected file corresponds to image data. If the selected file does not correspond to the image data, the controller 110 detects the determination result in step 306 and displays the title of the selected file in step 307.

Alternatively, if the selected file does correspond to the image data, the controller 110 detects the determination result in step 306, and generates a thumbnail image for the selected image data and displays the attached image data in the form of the corresponding thumbnail image in step 308.

Steps 305 through 308 allow the user to attach the selected image data and check the attached image data through the thumbnail image.

Once the thumbnail image is displayed, if the user selects a predetermined thumbnail image, the controller 110 detects the selection of the predetermined thumbnail image in step 309 and displays the original image data of the selected thumbnail image in step 310. If the user selects a deletion of a thumbnail image in step 308 or 310, the controller 110 detects the selection of the deletion in step 311. Then the controller 110 cancels the attaching of the selected image data and deletes the corresponding thumbnail image in step 312.

If the user selects a message in the email creation mode, the controller 110 detects the selection of the message in step 313 and switches the wireless terminal to an email message input mode in step 314. If the user inputs message content in the email message input mode of step 314 and selects a confirmation, the controller 110 detects the selection of the confirmation and stores the input content as the content of the email message.

If the creation of the email message is completed through the above-described steps, the controller 110 detects the completion of the email message in step 315 and transmits the created email to a predetermined reception address in step 316. The format of the email transmitted in step 316 stores the title, the message content, the file excluding the image data, the file including the image data, and the thumbnail image data of the image data.

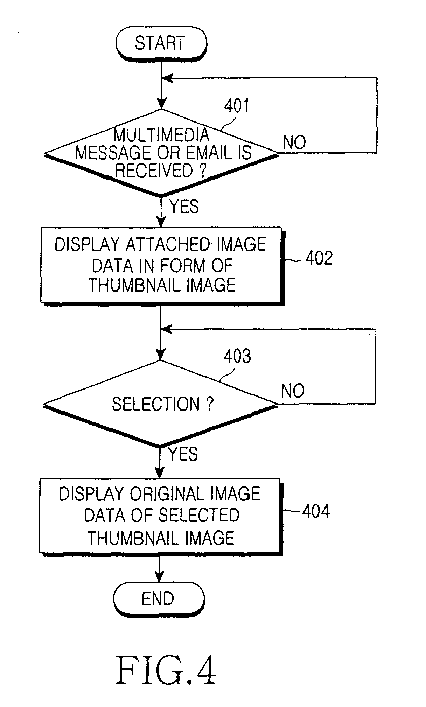

FIG. 4 is a flowchart illustrating a method for displaying an attached file in the message reception mode or the email reception mode of the wireless terminal according to an exemplary embodiment of the present invention.

Referring to FIG. 4, if the multimedia message or the email is received in the wireless terminal, the controller 110 detects the reception of the multimedia message or the email and informs the wireless terminal user of the reception of the multimedia message or the email in step 401. If the user selects the multimedia message or the email in order to check the received multimedia message or email, the controller 110 detects the selection of the multimedia message or the email, searches for the format of the multimedia message or the email, and determines if a thumbnail image exists in the received multimedia message or email.

If the thumbnail image exists in the received multimedia message or email, the controller 110 detects the existence of the thumbnail image and displays the thumbnail image in step 402. Herein, the controller 110 may display the corresponding title, content, and file title among others, stored in the format of the multimedia message or the email.

If the user selects a predetermined thumbnail image in step 402, the controller 110 detects the selection of the predetermined thumbnail image in step 403 and displays the original image data of the selected thumbnail image in step 404.

As described above, the present invention displays attached data in the format of a thumbnail image, so that a user can easily check the attached data.

While the present invention has been shown and described with reference to certain exemplary embodiments thereof, it will be understood by those skilled in the art that various changes in the form and details may be made therein without departing from the scope and spirit of the invention as defined by the appended claims.

## Claims

1. A method for displaying data in a wireless terminal, the method comprising:
attaching image data selected in a message mode;
displaying the attached image data in a form of a thumbnail image; and
transmitting a message comprising the thumbnail image.

2. The method as claimed in claim 1, further comprising generating the thumbnail image of the attached image data when the selected image data is attached.

3. The method as claimed in claim 1, further comprising:
displaying original image data of a selected thumbnail image when a thumbnail image is selected from the displayed thumbnail image; and
canceling an attaching of the selected image data and the corresponding thumbnail image when a deletion is selected.

4. A method for displaying data in a wireless terminal, the method comprising:
attaching a file selected in an email mode;
displaying the attached file in a form of a thumbnail image; and
transmitting an email comprising the thumbnail image.

5. The method as claimed in claim 4, further comprising generating the thumbnail image of the attached file when the attached file corresponds to an image data file.

6. The method as claimed in claim 4, further comprising:
displaying original image data of a selected thumbnail image when a thumbnail image is selected from the displayed thumbnail image; and
canceling an attaching of the selected image data file and the corresponding thumbnail image when a deletion is selected.

7. A method for displaying data in a wireless terminal, the method comprising:
displaying a thumbnail image attached to a message when the message is received; and
displaying original image data of a selected thumbnail image when the predetermined thumbnail image is selected from the displayed thumbnail image.

8. The method as claimed in claim 7, wherein the displaying of the thumbnail image attached to the message further comprises:
determining whether image data exists in the message when the message is received; and
displaying a corresponding thumbnail image of the image data when the image data exists in the message.

9. The method as claimed in claim 7, further comprising:
displaying a thumbnail image attached to an email when an email is received; and
displaying original image data of a selected thumbnail image when the predetermined thumbnail image is selected from the displayed thumbnail image.

10. A wireless terminal comprising:
a memory for attaching image data selected in a message mode;
a display unit for displaying a thumbnail image of the attached image data; and
a controller for transmitting a message comprising the thumbnail image.

11. The wireless terminal as claimed in claim 10, wherein the controller generates a thumbnail image of the attached image data when the selected image data is attached.

12. A wireless terminal comprising:
a memory for attaching a file selected in an email mode;
a display unit for displaying a thumbnail image of the attached; and
a controller for transmitting an email comprising the thumbnail image.

13. The wireless terminal as claimed in claim 12, wherein the controller generates a thumbnail image of the attached file when the selected file is attached.
